Europäisches Patentamt

European Patent Office

Office européen des brevets

(11) Veröffentlichungsnummer: **0 259 775**
**B1**

(12) **EUROPÄISCHE PATENTSCHRIFT**

(45) Veröffentlichungstag der Patentschrift:
16.05.90

(51) Int. Cl.⁵: **H02M 3/335**

(21) Anmeldenummer: **87112827.8**

(22) Anmeldetag: **02.09.87**

(54) **Schaltungsanordnung zur Begrenzung, Regelung und gegebenenfalls Unterbrechung des Kollektorstroms des im Primärkreis eines Schaltnetzteiles liegenden Schalttransistors.**

(30) Priorität: **11.09.86  DE 3630991**

(43) Veröffentlichungstag der Anmeldung:
**16.03.88 Patentblatt 88/11**

(45) Bekanntmachung des Hinweises auf die Patenterteilung:
**16.05.90 Patentblatt 90/20**

(84) Benannte Vertragsstaaten:
**AT BE CH DE ES FR GB IT LI NL SE**

(56) Entgegenhaltungen:
**EP-A- 0 031 986**
**EP-A- 0 082 241**

(73) Patentinhaber: **Siemens Aktiengesellschaft, Wittelsbacherplatz 2, D-8000 München 2(DE)**

(72) Erfinder: **Pötsch, Edmund, Dipl.-Ing. (FH), Augsburger Strasse 41, D-8901 Königsbrunn(DE)**
Erfinder: **Hoffmann, Hans, Dipl.-Ing. (FH), Pferssee Strasse 7 b, D-8900 Augsburg(DE)**

## Beschreibung

Die Erfindung betrifft eine Schaltungsanordnung zur Begrenzung, Regelung und gegebenenfalls Unterbrechung des Kollektorstroms des im Primärkreis eines Schaltnetzteils liegenden Schalttransistors gemäß den Merkmalen des Oberbegriffs des Anspruchs 1.

Bei Schaltnetzteilen ist der Schutz des Schalttransistors vor Überstrom von großer Wichtigkeit. Aus diesem Grund sind im Steuer-Stromkreis des Schalttransistors, wie beispielsweise aus der deutschen Patentschrift 3 019 906 bekannt, Regelbausteine vorgesehen, die eine Strombegrenzung und Regelung des Kollektorstroms bewirken. Diese Regelbausteine enthalten neben einer Strombegrenzungseinrichtung einen Vergleicher und einen Pulsdauermodulator, der das Tastverhältnis des Schalttransistors beeinflußt. Der Vergleicher vergleicht einen jeweils aktuellen Spannungswert, der dem Kollektorstrom des Schalttransistors proportional ist, mit einem Referenzsignal und liefert bei einem das Referenzsignal übersteigenden Spannungswert ein Steuersignal für den Pulsdauermodulator mit der Folge, daß das Tastverhältnis des Schalttransistors schmal gesteuert wird. Auf diese Weise wird die Einschaltdauer des Schalttransistors und damit die Energieentnahme aus der Primärquelle geregelt.

Bei der aus der EP–A 0 031 986 bekannten Strombegrenzungsschaltung wird dies beispielsweise dadurch erreicht, daß das Ausgangssignal des Pulsbreitenmodulators einem UND-Glied zugeführt wird, dessen Ausgang durch ein aus einem dem Kollektorstrom des Schalttransistors proportionalen Spannungswert und einem Referenzwert abgeleitetes Vergleichssignal bzw. durch das Ausgangssignal einer nachfolgenden Kippstufe freigeschaltet wird. Bei rasch ansteigendem Kollektorstrom wird durch frühzeitiges Umschalten der Kippstufe das UND-Glied so zeitig gesperrt, daß am Ausgang des UND-Gliedes nur noch entsprechend kurze Ansteuerimpulse für den Schalttransistor auftreten.

Diese Art der Strombegrenzung bzw. Stabilisierung ist insofern problembehaftet, als der Schalttransistor ein minimales Tastverhältnis nicht unterschreiten und deshalb der Transistor nicht völlig gesperrt werden kann. In dem durch das minimale Tastverhältnis vorgegebenen Zeitraum wird nämlich der Kollektorstrom des Schalttransistors nur noch von der Reihenimpedanz des Schaltnetzteils begrenzt. Wenn diese Reihenimpedanz sehr kleine Werte erreicht, kann ein derart steiler Stromanstieg und damit hoher Impulsstrom auftreten, daß der Schalttransistor zerstört wird.

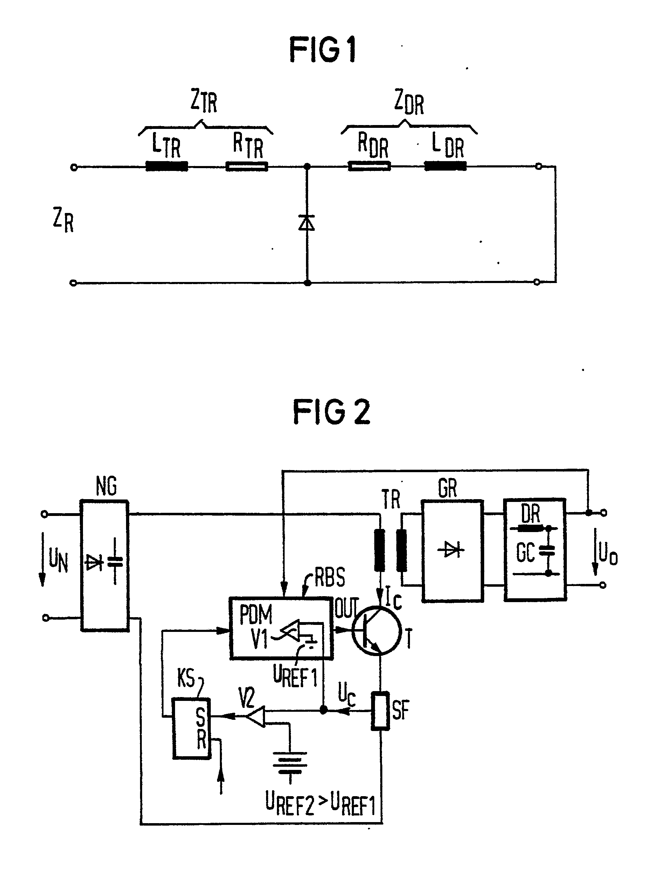

Das in Fig. 1 dargestellte Ersatzschaltbild für ein Schaltnetzteil zeigt die relevanten Größen der Reihenimpedanz $Z_R$ bei kurzgeschlossenem Ausgang des Schaltnetzteils, wobei $Z_{TR}$ die Impedanz des Leistungstransformators, bestehend aus der Induktivität $L_{TR}$ und dem Widerstand $R_{TR}$ und $Z_{DR}$ die Impedanz der Drossel im Sekundärkreis des Schaltnetzteils, bestehend aus der Induktivität $L_{DR}$ und dem Widerstand $R_{DR}$ bedeuten. Die Teilimpedanzen

$Z_{TR}$ und $Z_{DR}$ sind dabei so zu dimensionieren, daß sich eine ausreichend große Reihenimpedanz $Z_R$ ergibt, um den Strom durch den Schalttransistor während der minimalen Einschaltdauer auf einen für den Schalttransistor zulässigen Wert zu begrenzen. Die wesentliche Größe ist dabei die Streuinduktivität $L_{TR}$ des Leistungsübertragers $T_R$, da bei kurzgeschlossenem Ausgang die Speicherdrossel im Ausgangsfilter innerhalb weniger Taktperioden gesättigt ist, mit der Folge, daß die Reihenimpedanz $Z_{DR}$ der Drossel vernachlässigbar klein wird.

Der vorliegenden Erfindung liegt nun die Aufgabe zugrunde, ein Schaltnetzteil im Hinblick auf eine Begrenzung und Regelung des Kollektorstromes im Schalttransistor so auszubilden, daß auch bei extrem niedriger Reihenimpedanz des Schaltnetzteils im Kurzschlußfall ein ausreichender Schutz des Schalttransistors vor Überstrom gewährleistet ist.

Diese Aufgabe wird bei einem Schaltnetzteil der eingangs genannten Art durch die kennzeichnenden Merkmale des Patentanspruchs 1 gelöst.

Eine vorteilhafte Weiterbildung des Erfindungsgedankens ist im Anspruch 2 angegeben.

Im folgenden wird ein Ausführungsbeispiel der Erfindung anhand der FIG 2 näher beschrieben.

Das in der FIG 2 dargestellte Blockschaltbild eines Schaltnetzteiles zeigt eingangsseitig einen Netzgleichrichter NG mit nachfolgendem Siebglied zur Gleichrichtung und Siebung der Netzeingangsspannung $U_N$, einen Leistungsübertrager TR und einen in dessen Primärkreis liegenden Schalttransistor T. Sekundärseitig folgt nach dem Leistungsübertrager TR ein Gleichrichter GR und eine Siebschaltung, bestehend aus einer Längsdrossel DR und einem im Querzweig liegenden Glättungskondensator GC. Zur Stabilisierung der Ausgangsspannung $U_0$ ist im Primärkreis ein integrierter Regelbaustein RBS vorgesehen, der die Frequenz oder das Tastverhältnis des Schalttransistors T beeinflußt. In Serie zum Schalttransistor T ist ferner ein Stromfühler SF eingeschaltet, der am Ausgang eine dem Kollektorstrom $I_C$ proportionale Regelspannung $U_C$ liefert. Diese Regelspannung $U_C$ wird an den ersten Eingang des im Regelbaustein RBS vorgesehenen, die Funktion einer Strombegrenzungsschaltung ausübenden Vergleichers V1 geführt, dessen zweiter Eingang mit einer Referenzspannung $U_{REF1}$ beaufschlagt ist. Sobald die Regelspannung $U_C$ die interne Schwellenspannung überschreitet, liefert der Vergleicher V1 ein Steuersignal für den Pulsdauermodulator PDM, der durch eine Schmalsteuerung der Taktimpulsbreite des Schalttransistors T eine Begrenzung des Kollektorstroms $I_C$ bewirkt.

Die Regelspannung $U_C$ wird darüberhinaus an den ersten Eingang des zweiten Vergleichers V2 geführt, dessen zweiter Eingang mit einer zweiten Referenzspannung $U_{REF2}$ beaufschlagt ist. Der durch die zweite Referenzspannung festgelegte Schwellwert des zweiten Vergleichers V2 ist dabei etwas höher gewählt als der Schwellwert des ersten Vergleichers V1. Solange die interne Strombegrenzung im Regelbaustein RBS durch eine Schmalsteuerung des Tastverhältnisses den Laststrom $I_C$ begrenzen kann, steigt der Wert der Regelspannung $U_C$ nicht über den Wert der Referenzspannung $U_{REF1}$ an. Wenn im Regelbaustein das minimale Tastverhältnis erreicht ist, kann der Strom $I_C$ durch die interne Strombegrenzung nicht weiter begrenzt werden. Andererseits steigt die Amplitude der Stromblöcke des Laststromes bei Erreichen des minimalen Tastverhältnisses weiter an und damit steigt auch die Regelspannung $U_C$. Sobald die Regelspannung $U_C$ den Wert der zweiten Referenzspannung $U_{REF2}$ erreicht, gibt der Vergleicher $V_2$ ein Signal an den Setzeingang S einer bistabilen Kippstufe KS ab. Das am Ausgang A dieser Kippstufe KS auftretende Signal gelangt an den Eingang einer im Regelbaustein RBS vorgesehenen Abschalteinrichtung, die eine sofortige Abschaltung der Ausgangssignale OUT des Pulsdauermodulators PDM bewirkt. Die Stromversorgung bleibt dann solange abgeschaltet, bis die bistabile Kippstufe KS über ihren Rücksetzeingang R rückgesetzt wird. Durch diese Maßnahme wird verhindert, daß strombegrenzende Reiheninduktivitäten des Schaltnetzteils nach mehreren Stromimpulsen gesättigt und damit unwirksam werden. Der Schalttransistor T ist auch bei niederimpedantem Kurzschluß vor Überstrom geschützt.

Bezugszeichenliste

FIG 1

$Z_R$   Reihenimpedanz
$Z_{TR}$   Impedanz des Leistungstransformators
$L_{TR}$   Induktivität des Leistungstransformators
$R_{TR}$   Widerstand des Leistungstransformators
$Z_{DR}$   Impedanz der Drossel
$R_{DR}$   Widerstand der Drossel

FIG 2

$U_N$   Netzeingangsspannung
NG   Netzgleichrichter
TR   Leistungsübertrager
T   Schalttransistor
GR   Gleichrichter
DR   Längsdrossel
GC   Glättungskondensator
$U_O$   Ausgangsspannung
RBS   Regelbaustein
SF   Stromfühler
$J_C$   Kollektorstrom, Laststrom
$U_C$   Regelspannung
V1, V2 Vergleicher
$U_{REF1}$ erste Referenzspannung
$U_{REF2}$ zweite Referenzspannung
PDM   Pulsdauermodulator
KS   Kippstufe
S   Setzeingang
R   Rücksetzeingang
OUT   Ausgangssignale des PDM

**Patentansprüche**

1. Schaltungsanordnung zur Begrenzung, Regelung und gegebenenfalls Unterbrechung des Kollektorstroms ($I_c$) des im Primärkreis des Schaltnetzteils liegenden Schalttransistors (T), unter Verwendung eines in Serie zum Schalttransistor (T) liegenden Stromfühlers (SF) sowie eines einen ersten Vergleicher (V1) und einen Pulsdauermodulator (PDM) enthaltenden Regelbausteins, der das Tastverhältnis des Schalttransistors (T) in Abhängigkeit von einem aus dem Ausgangssignal des Stromfühlers (SF) und einem Referenzsignal ($U_{REF1}$) gewonnenen Vergleichswert beeinflußt, dadurch gekennzeichnet, daß der Ausgang des Stromfühlers (SF) mit dem ersten Eingang eines zweiten Vergleichers (V2) verbunden ist, dessen zweiter Eingang mit einem gegenüber dem Referenzsignal ($U_{REF1}$) des Regelbausteins (RBS) höheren Referenzsignal ($U_{REF2}$) beaufschlagt ist, daß der Ausgang des zweiten Vergleichers (V2) mit dem Setzeingang (S) einer bistabilen Kippstufe (KS) verbunden ist und daß der Ausgang der bistabilen Kippstufe (KS) an den den Eingang einer dem Pulsdauermodulator (PDM) vorgeschalteten Abschalteinrichtung geführt ist.

2. Schaltungsanordnung nach Anspruch 1, dadurch gekennzeichnet, daß die Wiedereinschaltung des Schaltnetzteils durch Ansteuerung des Rücksetzeingangs (R) der bistabilen Kippstufe (KS) auslösbar ist.

**Claims**

1. Circuit arrangement for limiting, regulating and in some cases interrupting the collector current ($I_c$) of the switching transistor (T) in the primary circuit, using a current probe (SF) connected in series to the switching transistor (T) and a control component containing a first comparator (V1) and a pulse-duration modulator (PDM), which control component influences the duty ratio of the switching transistor (T) as a function of a comparison value gained from the output signal of the current probe (SF) and a reference signal ($U_{REF1}$), characterized in that the output of the current probe (SF) is connected to the first input of a second comparator (V2), the second input of which is fed with a reference signal ($U_{REF2}$) which is higher in relation to the reference signal ($U_{REF2}$) which is higher in relation to the reference signal ($U_{REF1}$) of the control component (RBS), in that the output of the second comparator (V2) is connected to the set input (S) of a bistable flip flop (KS) and in that the output of the bistabile flip flop (KS) is fed to the input of a switch-off device connected upstream of the pulse-duration modulator (PDM).

2. Circuit arrangement according to Claim 1, characterszed in that the resumption of operation of the mains component is triggered by actuation of the reset input (R) of the bistable flip flop (KS).

**Revendications**

1. Montage pour limiter, régler et éventuellement interrompre le courant de collecteur ($I_c$) du transistor de commutation (T) situé dans le circuit primaire du bloc d'alimentation réseau commuté, moyennant l'utilisation d'un détecteur de courant (SF) branché en série avec le transistor de commutation (T), ainsi que d'un module de régulation, qui contient un premier comparateur (V1) et un modulateur d'impulsions en durée (PDM) et influe sur le taux d'impulsions du transistor de commutation (T) en fonction d'une valeur de comparaison obtenue à partir du signal de référence du détecteur de courant (SF) et d'un signal de référence ($U_{REF1}$), caractérisé par le fait que la sortie du détecteur de courant (SF) est reliée à la première entrée d'un second comparateur (V2), dont la seconde entrée est chargée par un signal de référence ($U_{REF2}$) supérieur au signal de référence ($U_{REF1}$) du module de régulation (RBS), que la sortie du second comparateur (V2) est raccordée à l'entrée de positionnement (S) d'un étage à bascule bistable (KS) et que la sortie de l'étage à bascule bistable (KS) est raccordée à l'entrée d'un dispositif de coupure branché en amont du modulateur d'impulsions en durée (PDM).

2. Montage suivant la revendication 1, caractérisé par le fait que le rebranchement du bloc d'alimentation réseau commuté peut être déclenché par la commande de l'entrée de remise à l'état initial (R) de l'étage à bascule bistable (KS).

# FIG 1

# FIG 2